# NEW EUROPEAN PATENT SPECIFICATION

(11) **EP 3 702 499 B2**
(45) Date of publication and mention of the opposition decision: **02.09.2026**
(45) Mention of the grant of the patent: 03.05.2023
(21) Application number: 18902750.1
(22) Date of filing: 12.11.2018
(51) Int. Cl.: D03D 1/06, E06B 9/386, E06B 9/36, A47H 23/08

(54) **LIGHT-BLOCKING FABRIC AND MANUFACTURING METHOD THEREFOR**
LICHTBLOCKIERENDES GEWEBE UND HERSTELLUNGSVERFAHREN DAFÜR
TISSU DE BLOCAGE DE LUMIÈRE ET SON PROCÉDÉ DE FABRICATION

(30) Priority: 26.01.2018 KR 20180010179
(43) Date of publication of application: 02.09.2020
(73) Proprietor: Winplus Co., Ltd., Cheongju-si, Chungcheongbuk-do 28157 (KR)
(72) Inventor: BYUN, Tae Woong, Daejeon 34034 (KR)
(74) Representative: M. Zardi & Co S.A.
(86) International application number: PCT/KR2018/013704
(87) International publication number: WO 2019/146887

(56) References cited:
- EP-A1- 0 482 793
- EP-B1- 0 482 793
- WO-A1-2006/098555
- JP-A- H0 688 469
- KR-A- 20100 052 196
- KR-A- 20130 086 444
- KR-A- 20130 086 444
- KR-A- 20170 064 766
- KR-A- 20170 064 766
- KR-B1- 101 506 253
- KR-B1- 101 506 253
- KR-B1- 101 580 632
- KR-B1- 101 580 632
- KR-B1- 101 881 501
- KR-Y1- 200 261 897
- US-A- 5 749 404
- US-B1- 6 311 755
- US-B2- 6 688 373

## Description

### Technical Field

The present invention relates to a light-blocking fabric usable for blinds for shading or wind protection and a manufacturing method therefore.

### Background Art

In general, curtains or blinds are mainly used to be installed in a building and serve as shading or wind protection. Here, curtains are a generic term for curtains installed on windows or doorways of buildings or used as partitions, and blinds refer to objects that are hung on windows to block light.

Blinds can adjust the degree of shading in a variety of ways. Depending on the shading method and structure, the blinds may be classified into vertical blinds, Venetian blinds, Roman shades, roller blinds, and the like.

Among the above-mentioned types of blinds, vertical blinds are relatively inexpensive, easy to install and use, and can create a unique and elegant appearance, so the vertical blinds are installed and used on window frames of verandas or balconies of a multi-family house such as a tenement house and apartment, or on the inside of windows of an offices or officetel.

While the vertical blinds can control the amount of light entering the room, and can allow a person to see outside views even when the blinds are closed, a person in the room can be seen and observed from outside because the vertical blinds are composed of a plurality of vertical slats, which is disadvantageous in that the vertical blinds may not be suitable for privacy. To prevent this, a method of changing the angle of the blind slats is used, but in this case, the degree of light transmittance of the vertical blinds may be lowered.

Additionally, the vertical blinds are generally made of synthetic resin, wood, aluminum sheets, fiber, or the like, and perform only a shading function. Accordingly, this may be inadequate to provide a decorative effect to interior functions of rooms, thereby making it difficult to gentrify the appearance of products, and the productability may be reduced due to the uniformity of manufacturing costs.

Accordingly, in an effort to overcome the above technical problems, for curtain-type vertical blinds in which a light-transmitting part and a non-light-transmitting part are integrally woven, various attempts have been made to provide a shading function, a privacy protection function, a decorative effect, and an insulating effect.

In the case of Patent Document 1 (see KR20170064766 A) invented by the present inventor, upon winding in a roll form, wrinkles may be generated on a light-transmitting part due to an inner space formed due to the difference in thickness between the light-transmitting part made of a mesh fabric and a light-shielding part made of a non-transparent fabric. Additionally, upon winding in a roll form, wrinkles may be generated on the inside of the light-shielding part due to the difference in circumference between the inside and the outside of the light-shielding part, which may cause a reduction in productability.

Moreover, when a blind is folded as needed, the gaps in the blind may be eccentrically widened.

WO 2006/098555A1 discloses a vertical curtain blind for light shielding, including an integrally formed light transmitting part and light blocking part. The light transmitting part is located between two light-shielding parts.

EP 0482793A1 discloses a fabric light control window covering in which fabric vanes are adhesively bonded between two sheer fabric sheets.

### Disclosure

### Technical Problem

Accordingly, the present invention has been made keeping in mind the above problems occurring in the related art,
and an objective of the present invention is to provide a light-blocking fabric by improving the conventional technology invented by the present inventor, wherein the light-blocking fabric is manufactured by attaching a light-transmitting part made of a mesh fabric between two light-shielding parts made of a non-transparent fabric, whereby when wound in a roll form, the light-blocking fabric is wound uniformly without wrinkles on the inside of the light-shielding parts, which may occur due to the difference in circumference between the inside and the outside of the light-shielding parts.

Another objective of the present invention is to provide a light-blocking fabric, wherein when wound in a roll form, the light-blocking fabric is wound uniformly without wrinkles on a light-transmitting part, which may occur due to an inner space formed due to the difference in thickness between the light-transmitting part made of a mesh fabric and a light-shielding part made of a non-transparent fabric.

Still another objective of the present invention is to provide a light-blocking fabric capable of preventing the problem that when a blind manufactured using the light-blocking fabric is folded as need, the gaps in the blind may be eccentrically widened.

### Technical Solution

In order to accomplish the above objective, the present invention provides a light-blocking fabric according to claim 1, it is usable for blinds for shading or wind protection, the light-blocking fabric including: two light-shielding parts made of a non-transparent fabric; and a light-transmitting part located between the two light-shielding parts, and attached to each of the light-shielding parts to a position that is at least half of any one surface of said light-shielding part so as to overlap therewith along a longitudinal direction, wherein the light-shieling parts and the light transmitting part may be attached together by various methods such as hot melting, an adhesive, sewing, or ultrasonic welding.

Furthermore, the present invention provides a manufacturing method for a light-blocking fabric, according to claim 5, the manufacturing method including: (a) a first injection step of unwinding two light-shielding part fabrics wound in a roll form, and injecting the same into a fabric processing apparatus; (b) a coating step of coating, with an adhesive, the position of at least half of any one surface of the two light-shielding part fabrics in the longitudinal direction while the two light-shielding part fabrics move along a guide part of the fabric processing apparatus; (c) a second injection step of unwinding a mesh fabric wound in a roll form, horizontally arranging and injecting the same into the fabric processing apparatus such that the same overlaps with the two light-shielding part fabrics on which the adhesive is coated in the coating step, at a position therebetween; (d) a manufacturing step of manufacturing a light-blocking fabric by attaching, to the mesh fabric injected in the second injection step, the two light-shielding part fabrics on which the adhesive is coated in the coating step along the guide part of the fabric processing apparatus; and (e) a winding step of winding, in a roll form, the light-blocking fabric manufactured in the manufacturing step.

### Advantageous Effects

According to the present invention, the light-blocking fabric is manufactured by attaching the light-transmitting part along the longitudinal direction to the position of at least half of any one surface of the two light-shielding parts. Thus, when wound in a roll form, the light-blocking fabric can be wound uniformly without wrinkles on the light-shielding parts and the light-transmitting part by balancing the thickness of the light-shielding parts and the light-transmitting part, thereby making it possible to prevent the problem of degrading the aesthetic appearance due to wrinkles. It is also possible to prevent the problem that when a blind manufactured using the light-blocking fabric is folded as need, the gaps in the blind may be eccentrically widened.

### Description of Drawings

FIG. 1 is a view illustrating a configuration of a light-blocking fabric according to the present invention.
FIG. 2 is a conceptual view illustrating a manufacturing method fora light-blocking fabric according to the present invention.
FIG. 3 is a sectional view illustrating a problem occurring in the Document 1 invented by the present inventor.
FIG. 4 is a sectional view illustrating an improved appearance due to the light-blocking fabric according to the present invention.
FIGS. 5 to 8 are plan views illustrating a method of improving the Document 1 invented by the present inventor, whereby Fig. 5 and 6 illustrate a configuration of a light-blocking fabric which is not according to the invention.
FIG. 9 is a conceptual view illustrating an example of a method of coupling a plurality of pieces of the light-blocking fabric according to the present invention.
FIG. 10 is a perspective view illustrating a fixing means in the form of a clip for fixing the light-blocking fabric manufactured by the manufacturing method according to the embodiment.
FIG. 11 is a view illustrating a state in which a blind formed by fixedly coupling a plurality of pieces of the light-blocking fabric manufactured by the manufacturing method according to an embodiment is unfolded so that the fabric pieces are arranged at a regular interval.

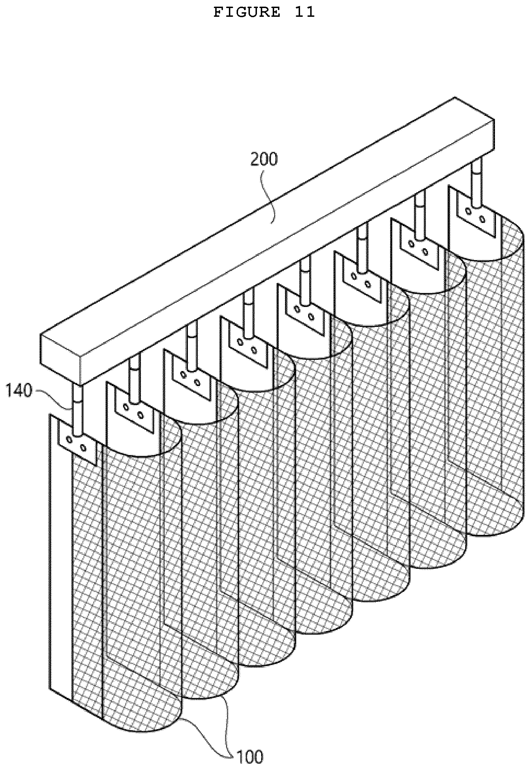

FIG. 11 is a view illustrating a state in which the blind formed by fixedly coupling the plurality of pieces of the light-blocking fabric manufactured by the manufacturing method according to the embodiment.

### <Description of the Reference Numerals in the Drawings>

100 : light-blocking fabric 110 : light-shielding part
120 : light-transmitting part 130 : installation hole
140 : fixing means 141 : coupling hole
143 : space 145 : fixing pin
200 : blind housing 210 : guide rail
220 : roller 230 : adjustment cord

### Best Mode

Hereinbelow, exemplary embodiments of the present invention will be described in detail with reference to the accompanying drawings such that the invention can be easily embodied by one of ordinary skill in the art to which this invention belongs.

The present invention provides a light-blocking fabric which can be wound in a roll form uniformly without wrinkles on a light-shielding part and a light-transmitting part by balancing the thickness of the light-shielding part and the light-transmitting part, and can enable a blind to avoid the problem that the gaps in the blind may be eccentrically widened when the blind is folded as needed.

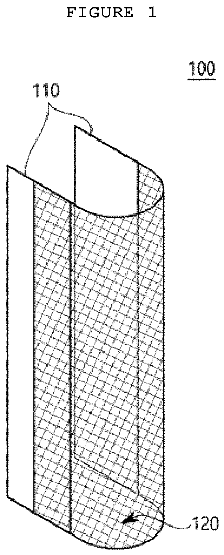

Referring to FIG. 1, the light-blocking fabric 100 according to the present invention is a light-blocking fabric which includes two light-shielding parts 110 made of a non-transparent fabric, and a light-transmitting part 120 made of a mesh fabric, located between the two light-shielding parts 110, and attached to a position that is at least half of any one surface of the light-shielding parts 110 so as to overlap therewith along the longitudinal direction. The light-blocking fabric can be used for blinds by continuously coupling adjacent light-blocking fabrics to each other.

In order to manufacture the above-described light-blocking fabric 100, the light-shielding parts 110 may use a fabric capable of blocking light into the room due to the low passage of light and wind, and a fabric such as non-transparent fabric.

The light-transmitting part 120 may use a fabric which is made of a mesh material capable of allowing the passage of air between the indoor and outdoor spaces while the light-shielding part 110 blocks light, and transmitting a certain amount of light. The material of the light-transmitting part 120 is not limited to a specific one. For example, a thin mesh cloth which is free to bend may be used, and various types of mesh fabrics may be selectively attached depending on the pattern or shape. Functionally, it is preferable to use a material having a transparency capable of appropriately reducing the shading and light level in the room.

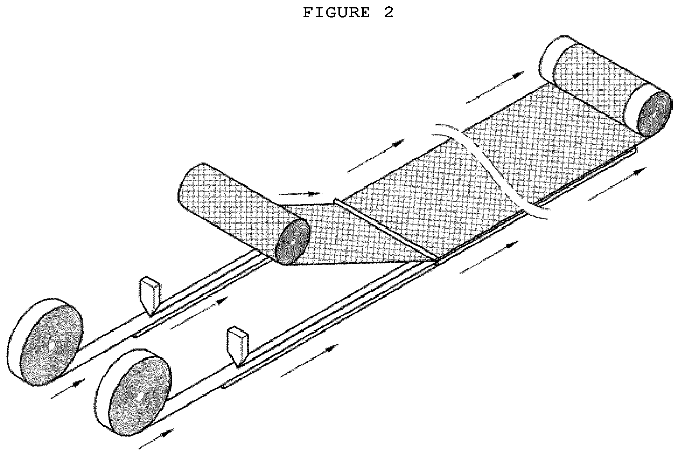

Referring to FIG. 2, in order to manufacture the light-blocking fabric 100, the prevent invention provides a manufacturing method for a light-blocking fabric, the method including: (a) a first injection step of unwinding two light-shielding part fabrics wound in a roll form, and injecting the same into a fabric processing apparatus; (b) a coating step of coating, with an adhesive, the position of at least half of any one surface of the two light-shielding part fabrics in the longitudinal direction while the two light-shielding part fabrics move along a guide part of the fabric processing apparatus; (c) a second injection step of unwinding a mesh fabric wound in a roll form, horizontally arranging and injecting the same into the fabric processing apparatus such that the same overlaps with the two light-shielding part fabrics on which the adhesive is coated in the coating step, at a position therebetween; (d) a manufacturing step of manufacturing a light-blocking fabric by attaching, to the mesh fabric injected in the second injection step, the two light-shielding part fabrics on which the adhesive is coated in the coating step along the guide part of the fabric processing apparatus; and (e) a winding step of winding, in a roll form, the light-blocking fabric manufactured in the manufacturing step.

At this time, the mesh fabric may be transferred to be positioned parallel to the longitudinal direction at a position of at least half of any one surface of the two fabrics so that the two fabrics and the mesh fabric integrally overlap with each other to manufacture a light-blocking fabric 100.

In particular, the manufactured light-blocking fabric 100 may be configured to be able to be wound by the fabric processing apparatus in a roll form without being limited by length, and thus the light-blocking fabric 100 may also be manufactured in a roll form. However, the present invention is not limited to this.

In order to integrally attach the above fabrics and mesh fabric in an overlapping form, a hot melt subjected to thermal treatment may be applied to the position of at least half of any one surface of the fabrics, or a fabric adhesive may be applied to the position, , and then the fabrics and mesh fabric may be compressed to be attached together. The fabrics and mesh fabric may also be coupled to each other by stitching, sewing, or ultrasonic welding, and thus the fabrics and mesh fabric may be bonded together by various methods without being limited by the attachment method, thereby forming the light-shielding parts 110 and the light-transmitting part 120 of the light-blocking fabric 100 according to the present invention.

After the light-blocking fabric 100 in which the fabrics and mesh fabric are coupled to each other is manufactured as described above, when used for a blind, the light-blocking fabric may be cut to a predetermined length suitable for a space where the blind is to be installed, and then cut pieces may be coupled to each other to form a blind. When using the above-described light-blocking fabric 100, there is an advantage in that blinds can be installed in a desired length without being constrained by space.

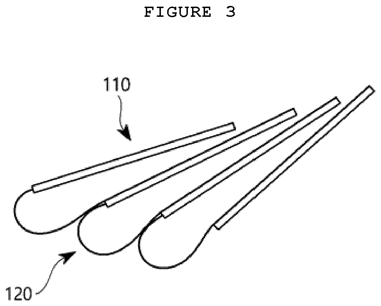

Referring to FIG. 3, the Document 1 is a light-blocking fabric comprised of a single light-shielding part 110 and a light-transmitting part 120 connected to the end thereof. When a blind is manufactured by fixedly coupling a plurality of pieces of the light-blocking fabric, when the blind is adjusted to be closed for shading or wind protection, the gaps in the blind may be eccentrically widened due to the property of the light-transmitting part 120 that tends to be unfolded.

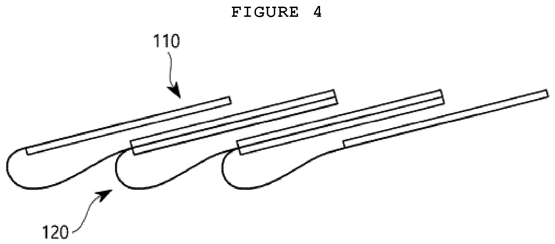

Accordingly, in the present invention, the two light-shielding parts 110 and the light-transmitting part 120 attached between the two light-shielding parts 110 are configured such that the light-transmitting part 120 is integrally attached to the position of at least half of any one surface of the two light-shielding parts 110 so as to overlap therewith along the longitudinal direction. Thus, as illustrated in FIG. 4, the present invention has an advantage in that the property of the light-transmitting part 120 that tends to be unfolded can be sufficiently suppressed when the blind is adjusted to be closed for shading or wind protection, whereby the the closed blind can avoid the problem that the gaps in the blind may be eccentrically widened, while maintaining shape.

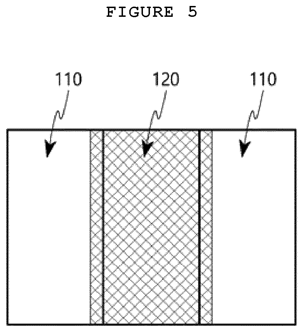

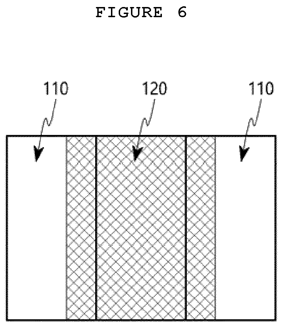

This may be described with reference to FIGS. 5 to 8. As illustrated in FIGS. 5 and 6, which are not part of the invention, the light-transmitting part 120 may be integrally attached along the longitudinal direction to a position of an end or less than half of any one surface of the two light-shielding parts 110, but in this case, the property of the light-transmitting part 120 that tends to be unfolded cannot be sufficiently suppressed, causing a problem in that the gaps in the blind may be eccentrically widened as in the Document 1.

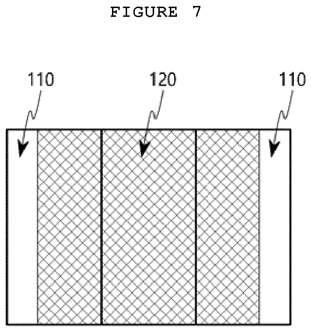

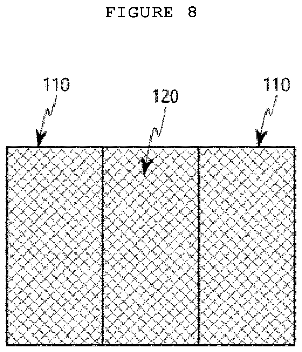

However, as illustrated in FIGS. 7 and 8, when the light-transmitting part 120 is integrally attached to the position of at least half of any one surface of the two light-shielding parts 110 so as to overlap therewith along the longitudinal direction, the property of the light-transmitting part 120 that tends to be unfolded can be sufficiently suppressed when the blind is adjusted to be closed for shading or wind protection, thereby enabling the closed blind to avoid the problem that the gaps in the blind may be eccentrically widened, while maintaining shape.

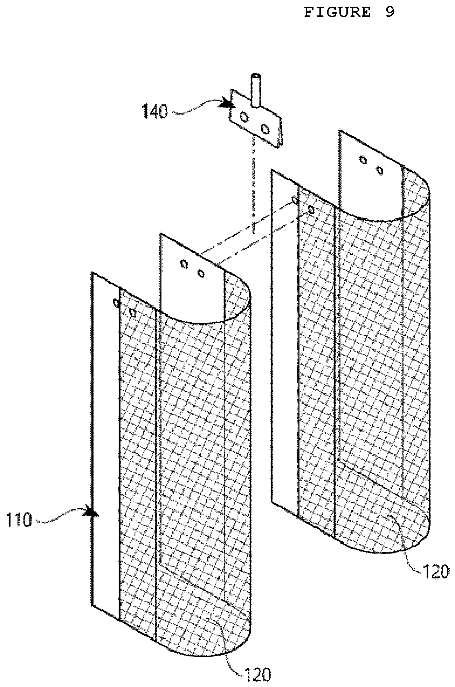

The above-described pieces of the light-blocking fabric 100 may be coupled to each other by various methods. For example, referring to FIG. 9, a plurality of installation holes 130 are formed in each of the pieces of the light-blocking fabric 100 by using an auger or a punching machine to install the blind. The above-described installation holes 130 may be formed at corresponding positions so that two adjacent pieces of the light-blocking fabric 100 can be coupled to each other, and each of the pieces of the light-blocking fabric 100 and an adjacent piece of the light-blocking fabric 100 may be connected and coupled to each other using a fixing means 140 detachably attached to the installation holes 130.

Further, to provide more robust coupling of upper sides of the pieces of the light-blocking fabric 100 when the plurality of pieces of the light-blocking fabric 100 are coupled to each other, the installation holes 130 may be formed in such a manner that a film of PET or metal material is attached between each of the pieces of the light-blocking fabric 100 and then drilled.

Additionally, the fixing means 140 may use a means in a form of a detachable clip, and any other means can be used without limitation as long as being capable of fixing the pieces of the light-blocking fabric 100 to a rail of the blind, and allowing the light-shielding parts 110 to be tiltable.

Additionally, when more robust coupling of the above-described pieces of the light-blocking fabric 100 is desired, materials such as a removable Velcro tape or weight may be attached to lower ends of the respective pieces of the light-blocking fabric 100 so that lower sides of the respective pieces of the light-blocking fabric 100 can be coupled to each other at positions corresponding to each other.

The light-blocking fabric 100 according to the present invention manufactured as described above is characterized in that a roll-type fabric comprised of the light-shielding parts 110 and the light-transmitting part 120 can be cut to fit the length according to the space in which the roll-type fabric is installed, and thus there is an advantage in that the blind is easy to adjust in height during installation and easy to handle during working, and that the blind can be installed without being constrained by the installation space.

Additionally, the light-transmitting part 120 can be embodied in a voluminous manner using a mesh fabric of various patterns thereby resulting in an elegant appearance. Furthermore, since the plurality of pieces of the light-blocking fabric 100 are connected to each other for installation when the blind is installed, the light-blocking fabric is easy to replace in case of contamination or damage. Moreover, the pieces of the light-blocking fabric 100 allows the passage of air between the indoor and outdoor spaces through the space between each of the pieces of the light-blocking fabric, thereby making it possible to provide a more comfortable environment compared to the environment in which a conventional blind is installed.

Hereinafter, the present invention will be described in more detail with reference to an exemplary embodiment. The following example is only for an illustrative purpose of describing the present invention in detail and should not be construed as limiting the scope of the present invention.

### <Example>

In this example, non-transparent fabrics and a mesh fabric wound in a roll form were put into a fabric processing apparatus, and the mesh fabric was attached between the non-transparent fabrics using a hot melt to manufacture a light-blocking fabric 100.

Then, the manufactured light-blocking fabric 100 was cut to a predetermined length to form a plurality of pieces, and two installation holes 130 were drilled on an upper side of each of the pieces of the light-blocking fabric 100 using a punching machine to manufacture a plurality of pieces of light-blocking fabric 100 each of which includes light-shielding parts 110, with the installation holes 130 formed.

Finally, each of the pieces of the light-blocking fabric 100 was positioned to face an adjacent piece of the light-blocking fabric 100 and then fixed using a fixing means 140 to couple lower ends of the adjacent pieces of the light-blocking fabric 100to each other.

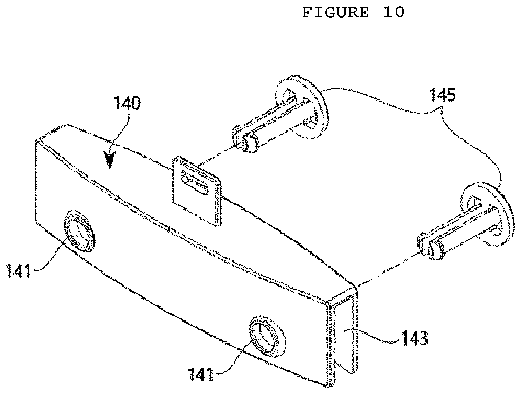

Referring to FIG. 10, the fixing means 140 in a form of a clip has a coupling hole 141 corresponding to each of a plurality of installation holes 130 formed in the pieces of the light-blocking fabric 100, so as to allow upper sides of each adjacent pieces of the light-blocking fabric 100 to be coupled to each other. The adjacent pieces of the light-blocking fabric 100 were positioned in a space 143 defined in the clip-shaped fixing means 140, and the upper sides of the adjacent pieces of the light-blocking fabric 100 were fixedly coupled to each other by a wedge-shaped fixing pin 145 passing through each of the installation holes 130 and each of the respective coupling holes 141.

Referring to FIG. 11, the pieces of the light-blocking fabric 100 were fastened to a roller 220 of a guide rail 210 included in a blind housing 200 which will be described later so that the pieces of the light-blocking fabric 100 can be horizontally folded or unfolded over the guide rail 210, whereby a blind was completed.

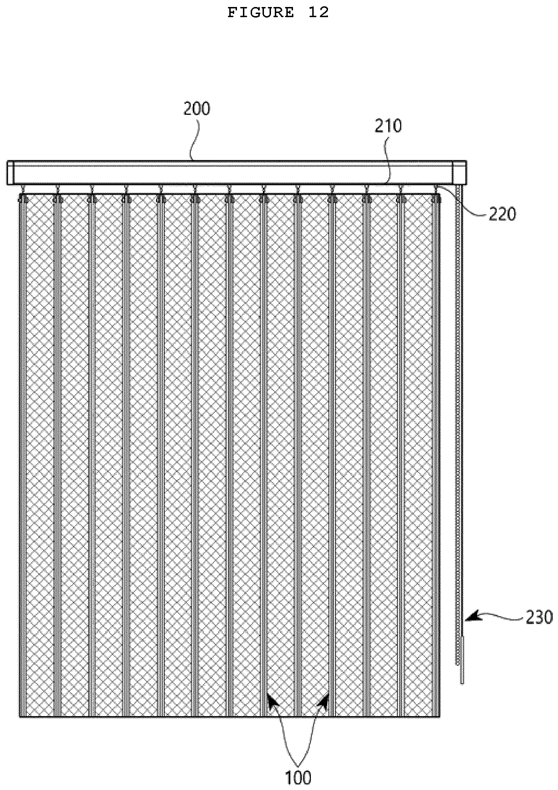

Referring to FIG. 12, the blind housing 200 used to manufacture the blind according to the example was configured using a conventionally known one, the clip-shaped fixing means 220 was attached to each of plurality of rollers 220 that allows the pieces of the light-blocking fabric 100 to be horizontally folded or unfolded over the guide rail 210, and an adjustment cord 230 was installed to be attached to the fixing means 140 to allow the blind to be tilted by equal to or greater than 90° and to tilt the fixing means 140, wherein the adjustment cord 230 was configured to be located at a position passing through the upper side of the fixing means 140 so that the adjustment cord 230 is fastened, and to allow the tilting of the pieces of the light-blocking fabric 100.

In this state, when the adjustment line 230 is pulled to shield the indoor and outdoor spaces, upper portions of the respective light-shielding parts 110 of the pieces of the light-blocking fabric 100 fixed by the fixing means 140 are tilted by 90°, allowing the respective light-shielding parts 110 to be maintained in a state substantially parallel to the window glass. Here, each surface of the light-shielding parts 110 is not deformed in the center portion thereof, and tilting force of the fixing means 140 allows the light-shielding parts 110 made of a non-light transmitting fabric to completely shield the indoor and outdoor spaces. Furthermore, when the respective light-shielding parts 110 are maintained in the direction perpendicular to the window glass, the indoor and outdoor spaces are opened. Thus, it was possible to manufacture a blind capable of lighting and ventilation through light-transmitting parts 120.

### Industrial Applicability

According to the present invention, a light-blocking fabric is manufactured by attaching a light-transmitting part along a longitudinal direction to a position of at least half of any one surface of two light-shielding parts. Thus, when wound in a roll form, the light-blocking fabric can be wound uniformly without wrinkles on the light-shielding parts and the light-transmitting part by balancing the thickness of the light-shielding parts and the light-transmitting part, thereby making it possible to prevent the problem of degrading the aesthetic appearance due to wrinkles. It is also possible to prevent the problem that when a blind manufactured using the light-blocking fabric is folded as need, the gaps in the blind may be eccentrically widened. Thus, the present invention can be more effectively used in the field of manufacturing a light-blocking fabric used for blinds.

## Claims

1. A light-blocking fabric, comprising:
two light-shielding parts (110) made of a non-transparent fabric; and a light-transmitting part (120) located between the two light-shielding parts (110), and attached to the light-shielding parts (110) so as to overlap therewith along a longitudinal direction, wherein the light-transmitting part (120) is attached to one surface of each of the two light-shielding parts (110) such that the light-transmitting part (120) is in contact with each of the two light-shielding parts (110) along the longitudinal direction and is in contact with at least half of the one surface of each of the two light-shielding parts (110) along the width direction,
wherein the light-transmitting part (120) in contact with each of the two light-shielding part (110) defines a connection area where the connection area covers at least half of the one surface of each of the two light-shielding parts (110) along the width direction,
wherein two opposite sides of an inner surface of the light-transmitting part (120) at both ends in a width direction thereof are attached to corresponding ones of two the light-shielding parts (110).

2. The light-blocking fabric of claim 1, wherein the light-shielding parts (110) and the light-transmitting part (120) are attached together with a hot melt or adhesive.

3. The light-blocking fabric of claim 1, wherein the light-shielding parts (110) and the light-transmitting part (120) are attached together by sewing or ultrasonic welding.

4. The light-blocking fabric of any one of claims 1 to 3, wherein the light-shielding parts (110) and the light-transmitting part (120) are attached in at least one position along the longitudinal direction.

5. A manufacturing method for a light-blocking fabric, the manufacturing method comprising:
(a) a first injection step of unwinding two light-shielding part fabrics wound in two separate roll forms, respectively, and injecting the two light-shielding part fabrics into a fabric processing apparatus in a longitudinal direction;
(b) a coating step of coating an adhesive onto at least half of any one surface of the two light-shielding part fabrics in the longitudinal direction while the two light-shielding part fabrics move along a guide part of the fabric processing apparatus;
(c) a second injection step of unwinding a light-transmitting mesh fabric wound in a roll form, horizontally arranging and injecting the light-transmitting mesh fabric into the fabric processing apparatus in the longitudinal direction such that the light-transmitting mesh fabric overlaps each of the two light-shielding part fabrics on which the adhesive has been coated in the coating step in the longitudinal direction;
(d) a manufacturing step of manufacturing the light-blocking fabric by attaching, to the light-transmitting mesh fabric injected in the second injection step, the two light-shielding part fabrics on which the adhesive has been coated in the coating step such that two opposite sides of an inner surface of the light-transmitting mesh fabric at both ends in a width direction thereof are attached to the two light-shielding part fabrics, respectively, wherein the longitudinal direction is perpendicular to the width direction; and
(e) a winding step of winding, in a roll form, the light-blocking fabric manufactured in the manufacturing step.

## Patentansprüche

1. Lichtblockierendes Gewebe, umfassend:
zwei lichtabschirmende Teile (110), die aus einem nicht-transparenten Gewebe gefertigt sind;
und
ein lichtdurchlässiges Teil (120), das sich zwischen den zwei lichtabschirmenden Teilen (110) befindet und entlang einer Längsrichtung an jedem der lichtabschirmenden Teile (110) befestigt ist, wobei das lichtdurchlässige Teil (120) an einer Oberfläche jedes der zwei lichtabschirmenden Teile (110) befestigt ist, derart, dass das lichtdurchlässige Teil (120) entlang der Längsrichtung mit jedem der zwei lichtabschirmenden Teile (110) in Kontakt steht und entlang einer Breitenrichtung mit mindestens der Hälfte der einen Oberfläche jedes der zwei lichtabschirmenden Teile (110) in Kontakt steht,
wobei das mit jedem der zwei lichtabschirmenden Teile (110) in Kontakt stehende lichtdurchlässige Teil (120) einen Verbindungsbereich bildet, wobei der Verbindungsbereich entlang der Breitenrichtung mindestens die Hälfte der einen Oberfläche jedes der zwei lichtabschirmenden Teile (110) abdeckt,
wobei zwei gegenüberliegende Seiten einer Innenfläche des lichtdurchlässigen Teils (120) an beiden Enden desselben in der Breitenrichtung jeweils an entsprechenden der zwei lichtabschirmenden Teile (110) befestigt sind.

2. Lichtblockierendes Gewebe nach Anspruch 1, wobei die lichtabschirmenden Teile (110) und das lichtdurchlässige Teil (120) mittels eines Heißschmelzklebstoffs oder Klebstoffs aneinander befestigt sind.

3. Lichtblockierendes Gewebe nach Anspruch 1, wobei die lichtabschirmenden Teile (110) und das lichtdurchlässige Teil (120) mittels Nähen oder Ultraschallschweißen aneinander befestigt sind.

4. Lichtblockierendes Gewebe nach Anspruch 1, wobei die lichtabschirmenden Teile (110) und das lichtdurchlässige Teil (120) in mindestens einer Position entlang der Längsrichtung befestigt sind.

5. Herstellungsverfahren für ein lichtblockierendes Gewebe nach einem der Ansprüche 1 bis 4, wobei das Herstellungsverfahren umfasst:
(a) einen ersten Einspeiseschritt des Abwickelns von zwei Geweben des lichtabschirmenden Teils, die jeweils in einer getrennten Rollenform aufgewickelt sind, und Einspeisens der zwei Gewebe des lichtabschirmenden Teils in einer Längsrichtung in ein Gewebeverarbeitungsgerät;
(b) einen Beschichtungsschritt des Beschichtens mindestens der Hälfte einer Oberfläche jedes der zwei Gewebe des lichtabschirmenden Teils in der Längsrichtung mit einem Klebstoff, während sich die zwei Gewebe des lichtabschirmenden Teils entlang eines Führungsteils des Gewebeverarbeitungsgeräts bewegen;
(c) einen zweiten Einspeiseschritt des Abwickelns eines lichtdurchlässigen Maschengewebes, das in einer Rollenform aufgewickelt ist, des horizontalen Anordnens und Einspeisens des lichtdurchlässigen Maschengewebes in der Längsrichtung in das Gewebeverarbeitungsgerät, sodass das lichtdurchlässige Maschengewebe entlang der Längsrichtung jeweils mit den zwei Geweben des lichtabschirmenden Teils überlappt, auf die der Klebstoff im Beschichtungsschritt aufgebracht wurde;
(d) einen Herstellungsschritt des Herstellens des lichtblockierenden Gewebes durch Befestigen der zwei Gewebe des lichtabschirmenden Teils, auf die der Klebstoff im Beschichtungsschritt aufgebracht wurde, an dem im zweiten Einspeiseschritt eingespeisten lichtdurchlässigen Maschengewebe, derart, dass zwei gegenüberliegende Seiten einer Innenfläche des lichtdurchlässigen Maschengewebes an beiden Enden desselben in einer Breitenrichtung jeweils an den zwei Geweben des lichtabschirmenden Teils befestigt sind, wobei die Längsrichtung senkrecht zur Breitenrichtung verläuft; und
(e) einen Aufwickelschritt des Aufwickelns des im Herstellungsschritt hergestellten lichtblockierenden Gewebes zu einer Rollenform.

## Revendications

1. Tissu de blocage de lumière, comprenant :
deux parties faisant écran à la lumière (110) faites d'un tissu non transparent ; et
une partie transmettant la lumière (120) située entre les deux parties faisant écran à la lumière (110) et fixée aux parties faisant écran à la lumière (110) de manière à les chevaucher le long d'une direction longitudinale, dans lequel la partie transmettant la lumière (120) est fixée sur une surface de chacune des deux parties faisant écran à la lumière (110), de sorte que la partie transmettant la lumière (120) est en contact avec chacune des deux parties faisant écran à la lumière (110) le long de la direction longitudinale et est en contact avec au moins la moitié de ladite surface de chacune des deux parties faisant écran à la lumière (110) selon la direction de la largeur,
dans lequel la partie transmettant la lumière (120) en contact avec chacune des deux parties faisant écran à la lumière (110) définit une zone de liaison, la zone de liaison couvrant au moins la moitié de ladite surface de chacune des deux parties faisant écran à la lumière (110) selon la direction de la largeur,
dans lequel deux côtés opposés d'une surface interne de la partie transmettant la lumière (120), aux deux extrémités de celle-ci dans la direction de la largeur, sont respectivement fixés aux deux parties faisant écran à la lumière (110).

2. Tissu de blocage de lumière selon la revendication 1, les parties faisant écran à la lumière (110) et la partie transmettant la lumière (120) étant attachées ensemble par un adhésif thermofusible ou par un adhésif.

3. Tissu de blocage de lumière selon la revendication 1, les parties faisant écran à la lumière (110) et la partie transmettant la lumière (120) étant fixées ensemble par couture ou soudure par ultrasons.

4. Tissu de blocage de lumière selon la revendication 1, les parties faisant écran à la lumière (110) et la partie transmettant la lumière (120) étant fixées dans au moins une position le long de la direction longitudinale.

5. Procédé de fabrication d'un tissu de blocage de lumière selon l'une quelconque des revendications 1 à 4, le procédé de fabrication comprenant :
(a) une première étape d'injection consistant à dérouler deux tissus de partie faisant écran à la lumière, respectivement enroulés sous deux formes de rouleau distinctes, et à injecter les deux tissus de partie faisant écran à la lumière dans un appareil de traitement de tissu selon une direction longitudinale ;
(b) une étape de revêtement consistant à revêtir, avec un adhésif, au moins la moitié d'une surface de chacun des deux tissus de partie faisant écran à la lumière dans la direction longitudinale tandis que les deux tissus de partie faisant écran à la lumière se déplacent le long d'une partie de guidage de l'appareil de traitement de tissu ;
(c) une seconde étape d'injection consistant à dérouler un tissu à mailles transmettant la lumière enroulé sous forme de rouleau, à agencer horizontalement le tissu à mailles transmettant la lumière et à l'injecter dans l'appareil de traitement de tissu selon la direction longitudinale, de telle sorte que le tissu à mailles transmettant la lumière chevauche respectivement chacun des deux tissus de partie faisant écran à la lumière selon la direction longitudinale, sur lesquels l'adhésif a été appliqué lors de l'étape de revêtement ;
(d) une étape de fabrication consistant à fabriquer le tissu de blocage de lumière en fixant, au tissu à mailles transmettant la lumière injecté lors de la seconde étape d'injection, les deux tissus de partie faisant écran à la lumière sur lesquels l'adhésif a été appliqué lors de l'étape de revêtement, de telle sorte que deux côtés opposés d'une surface interne du tissu à mailles transmettant la lumière, aux deux extrémités de celui-ci dans une direction de la largeur, soient respectivement fixés aux deux tissus de partie faisant écran à la lumière, la direction longitudinale étant perpendiculaire à la direction de la largeur ; et
(e) une étape d'enroulement consistant à enrouler, sous forme de rouleau, le tissu de blocage de lumière fabriqué lors de l'étape de fabrication.
